Europäisches Patentamt

European Patent Office

Office européen des brevets

(19)

(11) Veröffentlichungsnummer: **0 251 091**
**B1**

(12) # EUROPÄISCHE PATENTSCHRIFT

(45) Veröffentlichungstag der Patentschrift:
09.05.90

(51) Int. Cl.⁵: **F16L 37/28**

(21) Anmeldenummer: **87108871.2**

(22) Anmeldetag: **22.06.87**

(54) Vollschlauchsystemkupplung.

(30) Priorität: **30.06.86 DE 3621951**

(43) Veröffentlichungstag der Anmeldung:
**07.01.88 Patentblatt 88/1**

(45) Bekanntmachung des Hinweises auf die Patenterteilung:
**09.05.90 Patentblatt 90/19**

(84) Benannte Vertragsstaaten:
**AT BE CH DE ES FR GB LI LU NL SE**

(56) Entgegenhaltungen:
**EP-A- 0 089 638**
**DE-B- 1 292 970**
**DE-B- 1 810 282**
**DE-B- 2 425 139**
**DE-C- 412 139**
**DE-C- 834 630**
**FR-A- 1 302 002**
**US-A- 3 498 324**
**US-A- 4 078 577**
**US-A- 4 347 870**

(73) Patentinhaber: **Skibowski, Hubert, Hüllenkamp 54,
D-2000 Hamburg 73(DE)**

(72) Erfinder: **Skibowski, Hubert, Hüllenkamp 54,
D-2000 Hamburg 73(DE)**

(74) Vertreter: **Dipl.-Ing. H. Hauck Dipl.-Phys. W. Schmitz
Dipl.-Ing. E. Graalfs Dipl.-Ing. W. Wehnert Dr.-Ing. W.
Döring, Neuer Wall 41, D-2000 Hamburg 36(DE)**

**Beschreibung**

Die Erfindung bezieht sich auf eine Vollschlauchsystemkupplung, bei der das Gehäuse bei jedem der Kupplungsteile einen konischen Ventilsitz aufweist, der mit einem eine radial verlaufende Stirnfläche aufweisenden Absperrelement mit einer konischen Dichtfläche zusammenwirkt, wobei das Absperrelement mittels einer Feder gegen den Ventilsitz vorgespannt ist, bei der beide Absperrelemente je eine gleitend gelagerte Stange aufweisen, wobei eine erste Stange in einer Bohrung des ersten Absperrelements gelagert ist und über eine Öffnung in der Stirnfläche des ersten Absperrelements in Anlage mit der Stirnfläche des zweiten Absperrelements bringbar ist und die zweite Stange in einem Führungsteil im Kupplungsgehäuse geführt ist und als Führung für das zweite Absperrelement dient, bei dem ferner eine Betätigungsvorrichtung für die erste Stange vorgesehen ist zur Verstellung der ersten Stange in Richtung des zweiten Absperrelements und des ersten Absperrelements sowie des zweiten Absperrelements in die Öffnungsstellung und bei der schließlich eine Kupplungsverbindung vorgesehen ist, welche die Kupplungsteile lösbar miteinander verbindet.

Eine derartige Kupplung ist aus der FR-A 1 302 002 bekanntgeworden. Die erste Stange ist in einer Zylinderbohrung des ersten Absperrelements geführt und kann durch Druckbeaufschlagung der Zylinderbohrung verstellt werden. Das zweite Absperrelement weist einen Kolbenabschnitt auf, der in einem Zylinder eines Führungsteils gelagert ist. Erste Stange und erstes Absperrelement können daher mit Hilfe eines Druckmittels verstellt werden. Die zweite Stange ist mit dem zweiten Absperrelement verbunden und gleitend in einer Zylinderbohrung des zugeordneten Führungsteils gelagert. Durch Druckbeaufschlagung der Zylinderbohrung im Führungsteil kann das zugeordnete Absperrelement in die Schließstellung verstellt werden. Das Vaterkupplungsteil greift in das Mutterkupplungsteil ein, das am Ende einen nach außen aufgeweiteten kegligen Abschnitt aufweist, hinter den Rastkugeln greifen, die in einem hülsenartigen Käfig gehalten sind. Eine den Käfig umgebende feste Hülse ermöglicht die Aufnahme der Rastkugeln in radialen Bohrungen, wenn der Käfig in die Öffnungsstellung gebracht wird.

Die konischen Ventilelemente oder Absperrelemente wirken mit konischen Ventilsitzen zusammen. Die Stirnflächen der Absperrelemente bilden in der Schließstellung einen Ringraum, der entlüftet werden muß, wenn die Absperrelemente in die Schließstellung gehen. Gleichwohl gelangt eine gewisse Menge Medium nach außen, wenn die Kupplungsteile voneinander getrennt werden. Dies kann je nach Art des Mediums zu Gefährdungen oder zumindest zu einer Umweltverschmutzung führen. Nachteilig ist ferner, daß sich drei Steuerleitungen für Druckluft oder ein Hydraulikmedium quer zur Strömungsrichtung durch das Kupplungsgehäuse und die Führungsteile erstrecken. Ferner werden beide Kupplungsteile zur Betätigung der Absperrelemente in die Schließstellung gesteuert, was einen entsprechenden Aufwand erfordert. Außerdem sind erhebliche Kräfte notwendig, um die Absperrelemente bei verbundenen Kupplungsteilen in die Öffnungsstellung zu bringen. Übersteigt der Mediendruck einen bestimmten Wert, ist ein Öffnen nicht mehr möglich. Nachteilig ist auch, daß die Kupplungsteile ineinandergesteckt werden müssen, was die Handhabung erheblich erschwert, insbesondere bei großen Nennweiten. Die bekannte Kupplung bietet auch keine Sicherheit gegen ein Trennen der Kupplungsteile bei noch geöffneten Absperrelementen. In einem solchen Fall kann eine nicht unerhebliche Menge an Medium ausströmen, bevor die Rückstellfedern die Absperrelemente in die Schließstellung bringen. Schließlich ist die bekannte Kupplung nicht sonderlich geeignet für Rohrkupplungen von hoher Nennweite, wenn außerdem hohe Drücke bewältigt werden müssen.

Es ist ferner aus der DE-A 2 425 139 eine Vollschlauchsystemkupplung bekanntgeworden, bei der die Ventilelemente von Schieberhülsen gebildet sind, die mit Stegelementen an den Kupplungsenden zusammenwirken. Die Stirnflächen der Stegelemente liegen in der Trennebene der Kupplung, so daß nach dem Schließen der Schieberhülsen kein Medium zwischen den Stegelementen verbleibt, das bei einem Trennen der Kupplung auslaufen könnte. Die Schieberhülsen beider Kupplungsteile werden von einem Kupplungsteil aus mittels eines Steuermediums betätigt, was eine entsprechende Ausrichtung der Kupplungsteile beim Verbinden erfordert.

Der Erfindung liegt die Aufgabe zugrunde, eine Vollschlauchsystemkupplung zu schaffen, die einfach zu handhaben und zu betätigen ist, günstige Strömungseigenschaften aufweist und auch im rauhen Betrieb einwandfrei betätigbar ist.

Diese Aufgabe wird erfindungsgemäß dadurch gelöst, daß die Kupplungsgehäuse glatte radial verlaufende Stirnflächen aufweisen und mit Hilfe einer U-förmigen Ringsegmentanordnung, die mit einer äußeren Ringnut bzw. einem Ringflansch der Kupplungsgehäuse zusammenwirkt, verbindbar sind, die radial verlaufenden Stirnflächen der Absperrelemente in der Schließstellung annähernd in der Ebene der Gehäusestirnflächen liegen und die erste Stange mit einem Getriebe im Kupplungsgehäuse so gekoppelt ist, daß bei ihrer Verstellung in Richtung des zweiten Absperrelements zu dessen Öffnung auch das erste Absperrelement in die Offenstellung bewegt wird.

Bei der bekannten Kupplung nach der DE-PS 32 10 558 ist bereits bekannt, ein Kupplungsringsegment über eine Bogenlänge von etwa 180° oder weniger mit dem Mutterkupplungsteil zu verbinden, das eine Haltekante des Vaterkupplungsteils hintergreift unter Anpressung der Stirnflächen der Kupplungsteile gegeneinander, wobei eine Verriegelungsvorrichtung eine Verschiebung der Stirnfläche des Vaterkupplungsteils gegenüber der Stirnfläche des Mutterkupplungsteils vom Kupplungsringsegment fort verhindert. Eine derartige, als Durchgangskupplung konzipierte Konstruktion hat den Vorteil, daß die Kupplungsteile unabhängig von ihrer Drehstellung durch einfache Handgriffe verbindbar und lösbar sind. Bei der Erfindung ist erkannt worden, daß eine derartige Kupplungsverbindung auch für eine Vollschlauchsystemkupplung vorteilhaft verwendet werden kann. Die Kupplungsteile können in willkürlicher Drehlage durch ein einfaches Querverschieben relativ zueinander in Verbindung gebracht werden. Komplizierte Steckvorgänge, die insbesondere bei höheren Nennweiten Handhabungsprobleme hervorrufen, sind nicht erforderlich.

Die Kupplungsgehäuse haben entsprechend glatte radial verlaufende Stirnflächen, wobei die Stirnflächen der Absperrelemente in gleicher Höhe liegen, so daß bei verbundenen Kupplungsteilen in der Schließstellung der Absperrelemente zwischen diesen kein nennenswerter Raum verbleibt, in dem sich Medium sammeln kann. Das zweite Absperrelement wird von der ersten Stange betätigt, wobei diese mit einem Getriebe zusammenwirkt, das bei einer Betätigung der Stange gleichzeitig am ersten Absperrelement angreift, um dieses ebenfalls in Öffnungsstellung zu bringen.

Die Absperrelemente haben eine kegelförmige Dichtfläche, die mit kegelförmigen Ventilsitzen zusammenwirken, wobei die Ventilsitze unmittelbar an die Stirnflächen der Kupplungsgehäuse angrenzen. Derartige Ventilsitze haben den Vorteil, daß eine wirksame metallische Abdichtung auch im Brandfalle besteht. Die erfindungsgemäße Vollschlauchsystemkupplung ist mithin feuersicher. Ein weiterer Vorteil der Erfindung liegt darin, daß die Kupplung auch unter extremen Bedingungen eingesetzt werden kann, beispielsweise in Leitungen für Flüssiggas. Vereisungen an der Außenseite der Kupplungsgehäuse können deren Betätigung nicht beeinflussen. Auch Einwirkung durch Schmutz, Sand oder Staub führen zu keiner Behinderung der Kupplungsbetätigung.

Im Vergleich zu bekannten Vollschlauchsystemkupplungen sind die Strömungseigenschaften relativ günstig. Vorteilhaft ist ferner, daß beim Öffnen der Absperrelemente keine Volumenvergrößerung entsteht, welche bekanntlich den Kraftaufwand zur Betätigung der Absperrelemente erhöht.

Bei einer Ausgestaltung der Erfindung ist vorgesehen, daß die erste Stange einen Anschlag im Abstand vom freien Ende aufweist, das zweite Absperrelement eine Bohrung aufweist, in die bei Betätigung die erste Stange mit einem Endabschnitt eingreift unter Anlage des Anschlags an der Stirnfläche des zweiten Absperrelements. Auf diese Weise ist eine Sicherheit gegen ein Trennen der Kupplungsteile geschaffen, wenn die Absperrelemente in der Öffnungsstellung sind. Selbst wenn die Kupplungsverbindung gelöst wird, verhindert der Eingriff des Endabschnitts der ersten Stange in der Bohrung des zweiten Absperrelements ein seitliches Verschieben der Kupplungsteile gegeneinander. Da eine Axialbewegung der Kupplungsteile relativ zueinander erst erfolgen kann, nachdem sie seitlich auseinander bewegt sind, bleiben die Kupplungsteile so lange in der Verbindungsstellung wie die Absperrelemente geöffnet sind.

Die Betätigung der Absperrelemente erfolgt mechanisch. Eine Ausgestaltung der Erfindung sieht hierzu vor, daß die erste Stange außerhalb des ersten Absperrelements eine Zahnung aufweist, die mit einem Ritzel in Eingriff ist, eine an dem ersten Absperrelement angreifende dritte Stange annähernd parallel zur ersten verläuft, die ebenfalls eine Zahnung aufweist, die mit dem Ritzel in Eingriff ist. Das Ritzel kann zum Beispiel auf einem Drehzapfen sitzen, der aus dem Kupplungsgehäuse herausgeführt und mit einer Handhabe verbunden ist. Bei einer Drehung der Handhabe wird mithin die erste Stange in Richtung des zweiten Absperrelements bewegt, wobei gleichzeitig die dritte Stange das Absperrelement entgegengesetzt in Öffnungsstellung bewegt. Da die Absperrelemente durch Federn in Schließstellung vorgespannt sind, ist es zweckmäßig, die Handhabe zumindest in der Öffnungsstellung der Absperrelemente zu verriegeln. Wird die Verriegelung aufgehoben, verstellen die Rückstellfedern die Absperrelemente automatisch in die Schließstellung.

Anstelle eines Ritzels ist auch denkbar, die erste und dritte Stange über ein Gestänge zu koppeln, um die gewünschte synchrone Bewegung bei der Stange zu erzeugen.

Falls erhebliche Drücke in der Leitung herrschen, müssen unter Umständen große Kräfte für die Verstellung der Absperrelemente aufgebracht werden. In diesem Zusammenhang sieht eine Ausgestaltung der Erfindung vor, daß die erste Stange bei Betätigung mit einem im zweiten Absperrelement gelagerten Ventilelement derart zusammenwirkt, daß zu Beginn des Verstellvorgangs der ersten Stange ein Strömungskanal zwischen den Räumen hergestellt wird, die auf der dem Ventilsitz abgewandten Seite der Absperrelemente liegen. Bei dieser Ausführungsform wird ein erster Bewegungsabschnitt der ersten Stange dazu benutzt, das Ventilelement im zweiten Absperrelement zu betätigen, um einen Entlastungskanal freizugeben. Der Entlastungskanal kann beispielsweise gebildet sein durch eine in der ersten Stange vorgesehene Bohrung, die mit einer Bohrung im zweiten Absperrelement in Verbindung tritt, wenn das Ventilelement im zweiten Absperrelement diese Bohrung öffnet. Auf diese Weise wird zwischen den Kupplungsteilen eine Strömungsverbindung hergestellt, bevor die Absperrelemente betätigt werden. Es erfolgt dadurch ein Druckausgleich, so daß eine mehr oder weniger große Druckdifferenz sich der Betätigung der Absperrelemente nicht mehr widersetzt. Um diese Aufgabe zu lösen, ist es nach einer weiteren Ausgestaltung der Erfindung vorteilhaft, wenn im Getriebe ein Spiel besteht derart, daß das erste Absperrelement erst betätigt wird, wenn die erste Stange eine gewisse Strecke zurückgelegt hat.

Die Anbringung eines separaten Ventils im zweiten Absperrelement könnte sich unter Umständen aufwendig gestalten. Daher sieht eine weitere Ausgestaltung der Erfindung vor, daß das Ventilelement von einem Abschnitt der zweiten Stange gebildet ist, der in einer zur Stirnfläche des zweiten Absperrelements geöffneten Bohrung gleitend gelagert ist und seinerseits eine Längsbohrung aufweist, die mit dem zugeordneten Raum hinter dem zweiten Absperrelement in Verbindung tritt, wenn die zweite Stange von der ersten betätigt wird. Wie bereits erwähnt, kann in der ersten Stange eine Bohrung vorgesehen sein, die mit dem Inneren des Kupplungsgehäuses in Verbindung steht. Eine andere Möglichkeit besteht erfindungsgemäß darin, daß im ersten Absperrelement eine Querbohrung geformt ist, die mit der Längsbohrung im ersten Absperrelement verbunden ist, die erste Stange mit der Längsbohrung ein Entlastungsventil bildet, das bei Betätigung der ersten Stange eine an der Außenseite der ersten Stange vorgesehene mit der Querbohrung verbundene Nut zur Stirnseite des ersten Absperrelements öffnet zwecks Verbindung mit der Längsbohrung in der zweiten Stange. Während die erste Stange relativ zum ersten Absperrelement über dessen Stirn seite hinaus bewegt wird, wird eine Verbindung mit der Querbohrung im ersten Absperrelement mit der Stirnfläche hergestellt.

Eine andere Möglichkeit des Druckausgleichs besteht erfindungsgemäß darin, daß die dritte Stange ein Ventilglied aufweist, das mit einem Ventilsitz in einer Bohrung des zugeordneten Absperrelements zusammenwirkt. Der Ventilsitz ist zur betreffenden Stirnseite des Absperrelements geöffnet. Bei dem ersten Wegstück der dritten Stange beim Öffnungsvorgang wird das Ventilglied vom Ventilsitz abgehoben, und der entsprechende hintere Raum tritt mit der Stirnseite des Absperrelements in Verbindung. Die Fläche zwischen den aneinanderstoßenden Absperrelementen ist, wie bereits erwähnt, über eine Längsbohrung in der ersten Stange mit dem anderen Raum hinter dem ersten Absperrelement in Verbindung. Dadurch ist ein Druckausgleich hergestellt. Besonders vorteilhaft ist die Verwendung einer Kugel als Ventilglied, welche in einer Bohrung in der dritten Stange federbeaufschlagt gelagert ist, wobei die Bohrung einen Kugelsitz aufweist, gegen den die Kugel durch die Feder angedrückt wird. Wird die dritte Stange vom entsprechenden Absperrelement fortbewegt, wird die Kugel mitgenommen und öffnet dabei den Durchgang im Ventilsitz zu den Stirnflächen der Absperrelemente.

Es sei noch erwähnt, daß die erste Stange auch mit Hilfe eines Verstellzylinders betätigt werden kann, der etwa an der Außenseite eines Rohrbogens angebracht ist. Verstellt der Verstellzylinder die erste Stange, wird etwa über das Ritzel auch die dritte Stange betätigt. In diesem Fall ist eine Verriegelung, etwa der Handhabe zur Drehung des Ritzels, nicht erforderlich.

Die erfindungsgemäße Vollschlauchsystemkupplung läßt sich für verschiedene Anwendungszwecke und -bereiche einsetzen. Mit ihr können Rohre oder Schläuche beliebiger Nennweite miteinander verbunden werden. Eine Ausgestaltung der Erfindung ist gekennzeichnet durch eine Anwendung als Sicherheitstrennkupplung, wobei im Ansprechfall die Kupplungsverbindung gelöst und die Absperrelemente in die Schließstellung bewegt werden, entweder mit Hilfe eines an der ersten Stange angreifenden Verstellzylinders oder durch Aufheben der Verriegelung der ersten Stange bzw. des Getriebes in der Öffnungsstellung der Absperrelemente. Bei der Anwendung als Sicherheitstrennkupplung können zum Beispiel zwei oder mehr Ringsegmente über den gesamten Umfang des Mutterkupplungsteils angeordnet sein, die im Auslösefalle durch einen geeigneten Mechanismus entfernt werden. Bei Rohrleitungsverladeanlagen, wie etwa Schiffsverladeanlagen für Mineralöl oder andere über Rohrleitungen zu verpumpende Medien sind Relativbewegungen zwischen Abgabeort und Empfängerort nicht zu vermeiden. Die Verbindung zwischen einer stationären Rohrleitung an Land und einer quasi stationären Rohrleitung auf dem Schiff wird durch eine mittels Drehgelenken und anderer Verbindungselemente der bewegliche gemachten Rohrleitung hergestellt. Trotz dieser Bewegungsmöglichkeit kann nur ein begrenzter horizontaler oder vertikaler Anschlußbereich eingehalten werden. Wird dieser Anschlußbereich überschritten, muß die Sicherheitstrennkupplung die Verbindung lösen, damit die gesamte Verladeanlage nicht beschädigt oder zerstört wird. Dies ist in der beschriebenen Ausführungsform ohne weiteres der Fall. Außerdem wird vermieden, daß nennenswertes Medium nach außen gelangt und zur Umweltverschmutzung beiträgt.

Eine andere Anwendung der erfindungsgemäßen Kupplung bezieht sich auf Rohrverteiler, bei der ein um eine Achse dreh- oder schwenkbares Rohrstück mit einer ersten Leitung verbunden ist und am freien Ende das erste Stange aufweisende Kupplungsteil angeordnet ist, bei dem ferner in einer Ebene, die parallel zur Schwenkebene des ersten Kupplungsteils liegt, zweite Kupplungsteile angeordnet sind, die jeweils mit einer zweiten Leitung verbunden sind. Eine derartige Verteilvorrichtung ist beispielsweise durch die DE-PS 32 10 558 bekanntgeworden. Eine mit dem Rohrbogen verbundene Betätigungsvorrichtung hält ein Kupplungsringsegment, um dieses mit den jeweils verbundenen Kupplungsteilen in Eingriff zu bringen, wenn diese zueinander ausgerichtet sind. Diese bekannte Verteilvorrichtung läßt sich in vorteilhafter Weise auch bei der erfindungsgemäßen Vollschlauchsystemkupplung einsetzen.

Die Erfindung wird nachfolgend anhand von Zeichnungen näher erläutert.

Fig. 1 zeigt einen Schnitt durch eine Ausführungsform der erfindungsgemäßen Vollschlauchsystemkupplung.

Fig. 2 zeigt eine Draufsicht auf die Kupplung nach Fig. 1.

Fig. 3 zeigt einen Schnitt durch die Kupplung nach Fig. 1 entlang der Linie 3-3.

Fig. 4 zeigt teilweise im Schnitt in Draufsicht eine Verteilvorrichtung mit Kupplungen nach der Erfindung.

Fig. 5 zeigt äußerst schematisch eine andere Verteilvorrichtung mit Kupplungen nach der Erfindung.

Fig. 6 zeigt äußerst schematisch die in Fig. 4 teilweise gezeigte Verteilvorrichtung.

Fig. 7 zeigt schematisch eine alternative Betätigung eines Absperrelements der erfindungsgemäßen Kupplung.

Fig. 8 zeigt schematisch eine Ausführungsform zum Beenden der Kupplungsverbindung im Falle einer Sicherheitstrennkupplung.

Fig. 9 zeigt äußerst schematisch eine Verbindungsmöglichkeit zweier Kupplungsteile nach der Erfindung.

Fig. 10 zeigt eine Einzelheit aus der Darstellung nach Fig. 1, wobei jedoch einige Teile geändert sind.

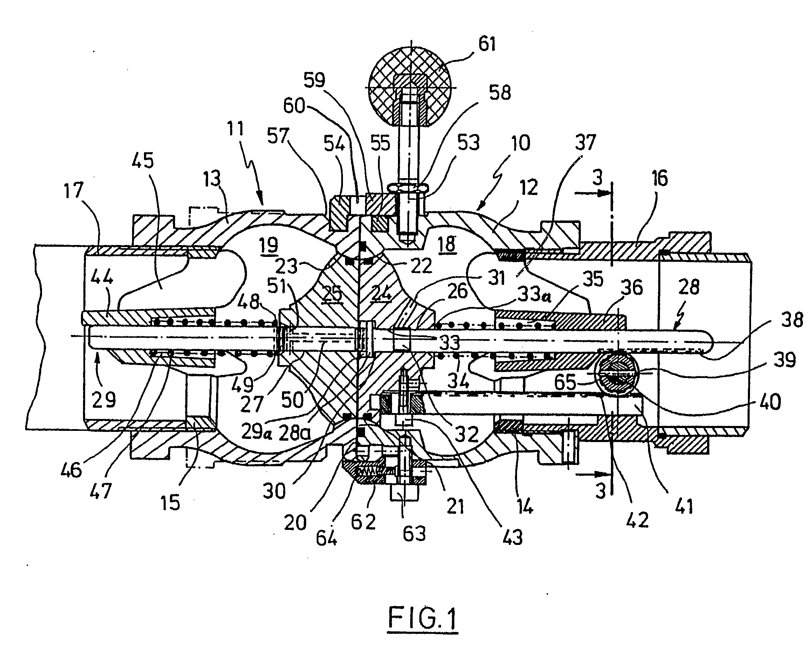

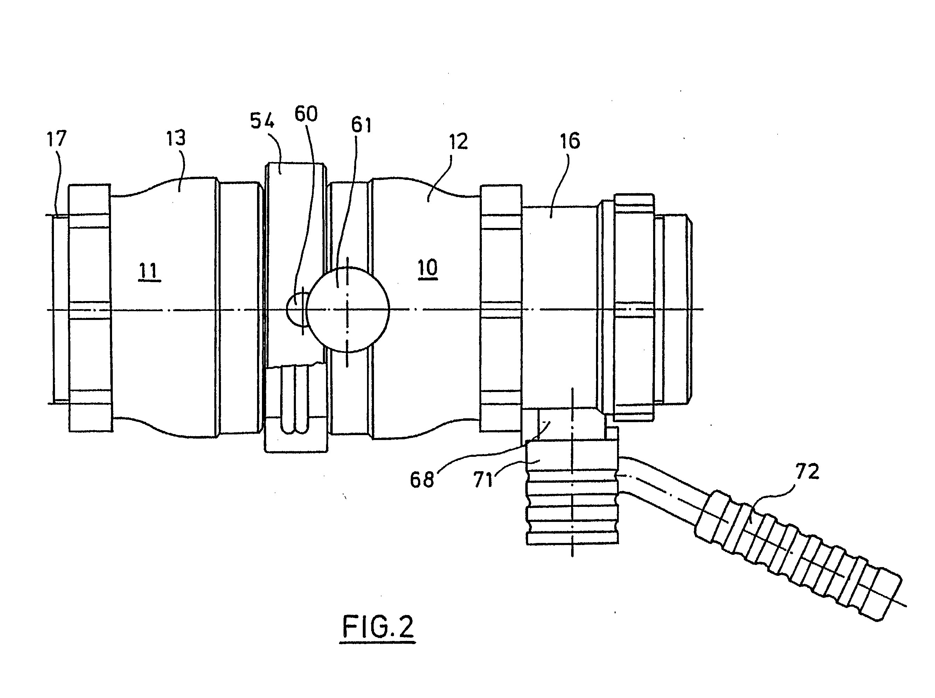

Die in den Figuren 1 und 2 dargestellte Kupplungsanordnung setzt sich aus dem Mutterkupplungsteil 10 und dem Vaterkupplungsteil 11 zusammen. Die Gehäuse 12, 13 der Kupplungsteile 10, 11 sind nahezu identisch ausgebildet. Im hinteren zylindrisch ausgebildeten Abschnitt der Gehäuse 12, 13 sind Leitelemente 14, 15 eingeschraubt. Ferner sind Anschlußstücke 16, 17 für einen Schlauch oder eine Rohrleitung eingeschraubt. Im mittleren Bereich sind die Gehäuse 12, 13 radial aufgeweitet und bilden Kammern 18, 19. Die Gehäuse 12, 13 haben radial verlaufende glatte Stirnflächen 20, 21. Im Anschluß an die Stirnflächen sind kegelige Ventilsitze 22, 23 geformt. Mit den Ventilsitzen wirken Absperrelemente 24, 25 zusammen, die entsprechende kegelige Dichtflächen aufweisen. Die Absperrelemente 24, 25 haben radial verlaufende glatte Stirnflächen, die in der Schließstellung der Absperrelemente mit den Stirnflächen 20, 21 der Gehäuse 12, 13 zusammenfallen. Die Absperrelemente 24, 25 haben axiale Durchbohrungen 26, 27, durch die erste bzw. zweite Stangen 28, 29 hindurchgeführt sind. Die erste Stange 28 weist mit Abstand zum linken Ende einen radialen Bund 28a auf, der in einer Erweiterung 29a der Durchbohrung 26 angeordnet ist, wobei auf der rechten Seite des Bundes 28a eine Dichtung 30 angeordnet ist. Der vordere links vom radialen Bund 28a liegende Abschnitt der Stange 28 hat einen geringen Abstand von der Stirnfläche des Absperrelements 24. Eine Querbohrung 31 im Absperrelement 24 verbindet den Raum 18 mit der Durchbohrung 26 im Bereich einer Einschnürung 32, die in Verbindung mit einer Nut 33 der Stange 28 steht, die sich zum Bund 28a hin erstreckt. Auf der Stange 28 ist ein Federring 33a angeordnet, gegen den eine Feder 34 anliegt. Das andere Ende der Feder 34 sitzt in der Tasche 35 einer Führungsbuchse 36, die von sternförmig angeordneten Stegen 37 des Führungsteils 14 gehalten ist.

Die im Querschnitt kreisförmige Stange 28 weist am hinteren Ende an der Unterseite eine Zahnung 38 auf, die in Eingriff steht mit einem Ritzel 39. Das Ritzel 39 ist auf einem Zapfen 40 im Anschlußstück 16 drehbar gelagert. Die Führungsbuchse 36 ist am hinteren Ende angeschrägt, so daß die Buchse 36 ein Widerlager für das Ritzel 39 bilden kann. Parallel zur Stange 28 erstreckt sich eine dritte Stange 41, die eine Zahnung 42 aufweist, mit der das Ritzel 39 ebenfalls in Eingriff ist. Die Stange 41 ist mit Hilfe einer Schraube 43 mit dem Absperrelement 24 verbunden. Die Schraube 43 erstreckt sich durch ein Langloch der Stange 41.

Die zweite Stange 29 wird durch eine Führungsbuchse 44 geführt, die mittels mehrerer radialer Stege 45 am Führungsteil 15 befestigt ist. Die Führungsbuchse 44 weist ebenfalls eine Tasche 46 auf zur Kammerung einer Feder 47, deren anderes Ende gegen einen Federring 48 auf der Stange 29 anliegt. Eine Dichtung 49 wird vom Federring 48 in eine konische Erweiterung in der Durchbohrung 27 gedrückt. Die Stange 29 weist eine Längsbohrung 50 auf, die zum rechten Ende der Stange 29 geöffnet ist. Am anderen Ende der Längsbohrung 50 ist eine Querbohrung 51 geformt, die in der in Fig. 1 gezeigten Position der Stange 29 verschlossen ist. Die Stange 29 endet am rechten Ende mit geringem Abstand zur Stirnfläche des Absperrelements 25.

Mit Hilfe eines Schraubbolzens 53 ist ein im Querschnitt U-förmiges Ringsegment 54 am Mutterkupplungsteil 10 befestigt. Ein Schenkel des Ringsegments 54, das sich über etwas weniger als 180° über den Umfang des Gehäuses 12 erstreckt, sitzt in einer Ringnut 55 des Gehäuses 12. In der gekuppelten Stellung greift der andere Schenkel des Ringsegments 54 in eine Ringnut 57 des Gehäuses 13. Auf den Schraubenbolzen 53 ist eine Mutter 58 geschraubt, die gegen eine Scheibe 59 anliegt, die ihrerseits in einer Ausnehmung 60 des Ringsegments 54 angeordnet ist, um dieses fest gegen das Mutterkupplungsteil 10 anzudrücken. Am anderen Ende des Schraubenbolzens 53 ist eine Griffkugel 61 geschraubt. Auf der dem Ringsegment 54 gegenüberliegenden Seite ist mit dem Gehäuse 12 ein Riegelelement 62 mit Hilfe einer Schraube 63 verbunden. Die Schraube 63 erstreckt sich durch ein Langloch des Riegelelements 62, das mit Hilfe einer Feder 64 nach links vorgespannt ist. In der in Fig. 1 gezeigten Position übergreift das Riegelelement 62 den radialen Bund des Vaterkupplungsteils 11.

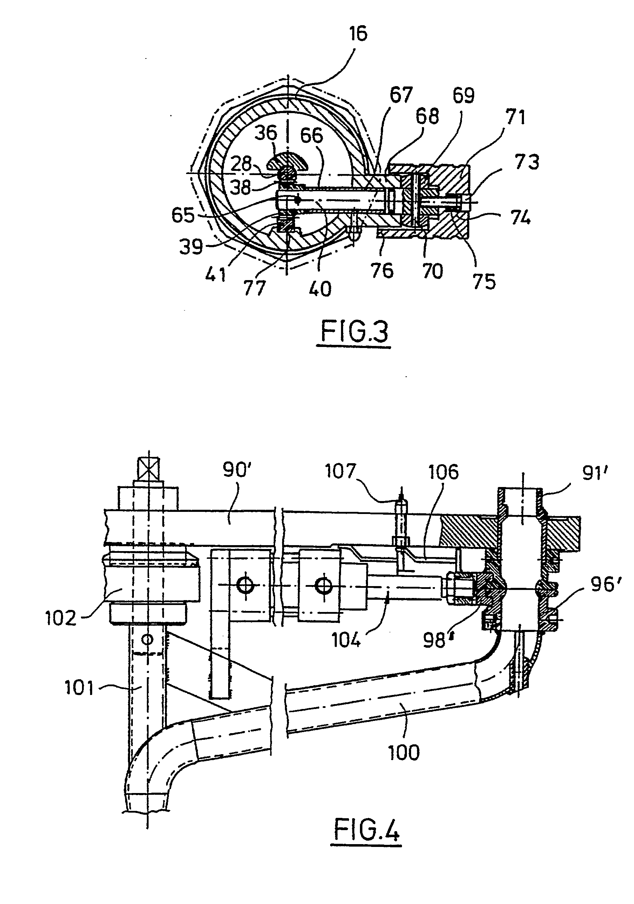

Wie bereits erwähnt, sitzt das Ritzel 39 auf einem Drehzapfen 40 und ist mit Hilfe eines radialen Stiftes 65 (siehe auch Fig. 3) drehfest gesichert. Der Drehzapfen 40 ist in einer Hülse 66 drehbar gelagert, die in einer seitlichen Bohrung 67 in einem seitlichen Ansatz 68 des Anschlußteils 16 teilweise hindurchgeführt ist. Im Anschluß an das Ende des Ansatzes 68 ist ein Ring 69 auf dem Zapfen 40 angeordnet und mit Hilfe eines Querstiftes 70 gegen Drehung gesichert. Eine Kappe 71 umgreift den Ring 69 und den Ansatz 68. Wie aus Fig. 2 hervorgeht, ist die Kappe 71 mit einem Handgriff 72 verbunden, der sich schräg von der Achse der Kupplungsanordnung fort erstreckt. In das Ende des Drehzapfens 40 ist ein Schraubenbolzen 73 geschraubt, der sich durch eine axiale Durchbohrung 74 der Kappe 71 hindurcherstreckt. Eine Feder 75 zwischen dem Schraubenbolzenkopf und dem Grund einer Bohrungserweiterung drückt die Kappe 71 in Richtung Ansatz 68. Der Kappenrand weist einen Ansatz 76 auf, der mit einem nicht gezeigten Anschlag zusammenwirkt, um den Drehzapfen und damit das Ritzel 39 in einer Stellung zu halten, in der das Absperrelement 24 in der Öffnungsstellung ist. Durch ein Nachaußenziehen der Kappe 71 mit Hilfe des Handgriffs 72 wird die Verriegelung gelöst und das Absperrelement 24 kann mit Hilfe der Feder 34 in die Schließstellung verstellt werden. Es versteht sich, daß der Ring 69 und die Kappe 71 in Dreheingriff miteinander sind.

Aus Fig. 3 ist im übrigen auch zu erkennen, daß die Stange 41 in einer entsprechenden Nut 77 des Anschlußteils 16 gleitend geführt ist.

Das Trennen und das Verbinden der Kupplungsteile 10, 11 ist in der DE-PS 32 10 558 bereits beschrieben. Gleichwohl soll hierauf noch einmal kurz eingegangen werden. Wird der Riegel 62 zurückgeschoben und gibt er den Ringbund des Vaterkupplungsteils 11 frei, können Vaterteil und Mutterteil 10 relativ zueinander verschoben werden, und zwar entlang ihrer Stirnflächen 20, 21, bis der linke Schenkel des Ringsegments 54 aus der Nut 57 freikommt. Die Kupplungsteile 10, 11 sind anschließend getrennt. Wie noch zu beschreiben sein wird, ist ein Trennen der Kupplungsteile 10, 11 nur möglich, wenn die Absperrelemente 24, 25 in der in Fig. 1 dargestellten Position, d.h. in der Schließstellung sind.

Zum Öffnen der Kupplungsanordnung nach Fig. 1 wird nach Entriegeln der Kappe 71 der Griff 72 und damit das Ritzel 39 gedreht. Dabei bewegt sich die Stange 28 nach links in Richtung des Absperrelements 25. Der Ringbund 28a der Stange 28 gibt die Dichtung 30 frei. Dadurch wird der Raum 18 mit der Erweiterung 29a verbunden, und zwar über die Querbohrung 31 und die Nut 33 der Stange 28. Hat die Stange 28 einen gewissen Weg zurückgelegt, taucht sie in die Durchbohrung 27 des Absperrelements 25 ein. Wird die Stange 28 noch etwas weiterbewegt, legt sie sich gegen die Stange 29 an und verschiebt diese nach links. Sobald die Querbohrung 51 mit der Kammer 19 in Verbindung ist, ist eine unmittelbare Verbindung zwischen den Kammern 18, 19 hergestellt. Auf diese Weise erfolgt ein Druckausgleich zwischen den Kammern 18, 19, und eine mögliche Druckdifferenz kann der Verstellung der Absperrelemente 24, 25 in die Öffnungsstellung nicht entgegenwirken.

Das Ritzel 39 bewegt die Stange 41 synchron mit der Stange 28, jedoch in entgegengesetzter Richtung. Da jedoch die Stange 41 ein Langloch aufweist, durch das die Schraube 43 hindurchgeführt ist, führt das Verstellen der Stange 28 über die erste Strecke nicht zu einer entsprechenden Verstellung des Absperrelements 24. Mithin erfolgt beim Einleiten der Verstellung der Absperrelemente 24, 25 zunächst die beschriebene Druckentlastung. Erst im Anschluß legt sich der Bund 28a gegen die Stirnfläche des Absperrelements 25 und die Stange 41 zieht am Absperrelement 24. Eine fortgesetzte Drehung des Ritzels 39 führt schließlich zu einer Verstellung der Absperrelemente 24, 25 in die endgültige Öffnungsstellung. In dieser liegen die rückwärtigen Seiten der Absperrelemente 24, 25 gegen die Führungsbuchsen 36 bzw. 44 an, und die Rückstellfedern 34 bzw. 47 sind in den Taschen 35 bzw. 46 der Führungsbuchsen gekammert. Die Federn 34 und 47 sind mithin gegen die erodierenden Eigenschaften des fließenden Mediums geschützt.

In der Öffnungsstellung kann das Medium durch die Kupplungsanordnung fließen, wobei die sternförmig angeordneten Stege 37, 45 strömungsberuhigend wirken und eine Wirbelbildung vermeiden helfen. In der geöffneten Position der Absperrelemente 24, 25 können die Kupplungsteile 10, 11 nicht getrennt werden. Da, wie bereits beschrieben, eine Trennbewegung der Kupplungsteile 10, 11 zunächst ein radiales Gegeneinanderverschieben erforderlich macht, bewirkt der in die Durchbohrung 27 des Absperrelements 25 hineingreifende vordere Abschnitt der Stange 28 eine Trennsicherung. Der beschriebene Stangenabschnitt widersetzt sich einer seitlichen Verschiebung, so daß das Ringsegment 54 nicht vom Vaterkupplungsteil 11 getrennt werden kann. Es ist daher gar nicht möglich, die beschriebene Kupplung zu trennen, wenn die Absperrelemente 24, 25 in der Öffnungsposition sind.

Werden die Kupplungsteile 10, 11 in der in Fig. 1 gezeigten Position getrennt, läßt sich das Absperrelement 25 nicht öffnen. Bezüglich des Absperrelements 24 ist eine weitere Verriegelungsposition für die Kappe 71 notwendig, damit nicht versehentlich das Absperrelement 24 geöffnet wird.

Wie aus Fig. 1 zu erkennen, befindet sich in der geschlossenen Position der Absperrelemente 24, 25 kein Zwischenraum zwischen den Absperrelementen 24, 25 und dem Kupplungsgehäuse 12 bzw. 13, so daß kein Medium nach außen gelangt, wenn die Kupplungsteile 10, 11 getrennt werden.

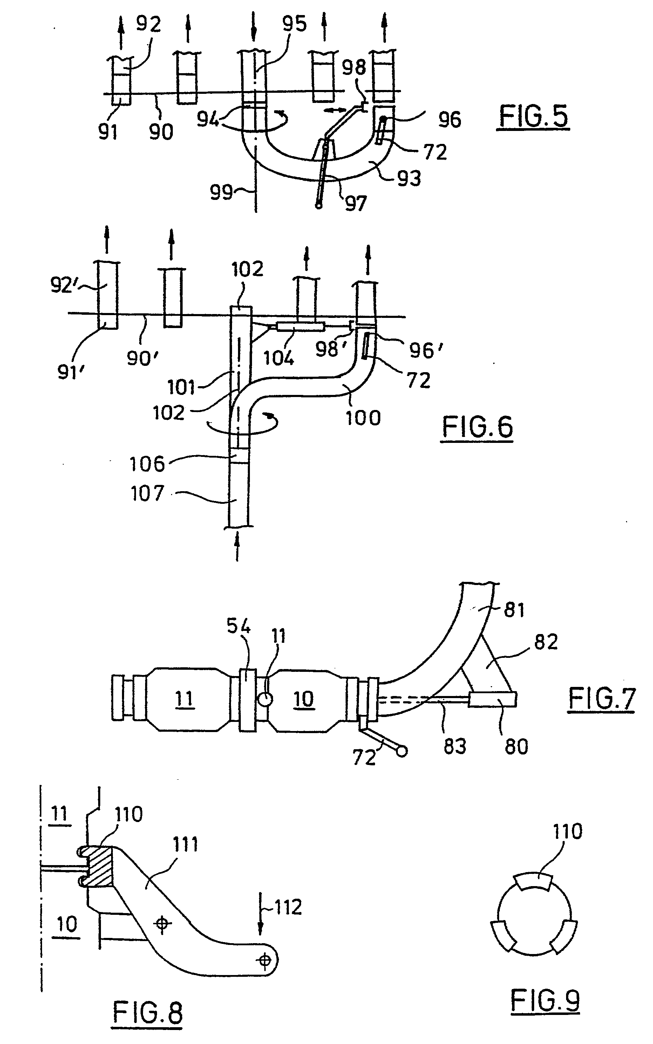

In Fig. 7 ist die Kupplungsanordnung nach Fig. 1 bzw. 2 erneut schematisch dargestellt. Alternativ oder zusätzlich zur Handbetätigung über den Griff 72 kann ein Verstellzylinder 80 vorgesehen sein, der an einem Rohrbogen 81 mit Hilfe einer Konsole 82 befestigt ist, welcher Rohrbogen mit dem Mutterkupplungsteil 10 verbunden ist. Die Kolbenstange 83 des Verstellzylinders 80 wird dichtend in den Rohrbogen 81 hineingeführt und erstreckt sich in das Gehäuse des Mutterkupplungsteils 10 hinein und ist mit der Stange 28 verbunden. Der Verstellzylinder 80 übernimmt mithin die Betätigung der Stangen 28, 41 mit Hilfe des Drehzapfens 40 entsprechend Fig. 1. Wird die Stange 28 mit Hilfe des Verstellzylinders 80 nach links bewegt (in Fig. 1), erfolgt automatisch eine Kopplung auf die Stange 41, die in oben beschriebener Weise nach rechts bewegt wird. Falls keine Druckentlastung durchgeführt zu werden braucht, können die oben beschriebenen Bohrungen und Kanäle in Fortfall kommen. Ferner ist dann nicht mehr notwendig, daß die Stange 41 über ein Spiel mit dem Absperrelement 24 verbunden ist. Der Verstellzylinder sorgt im übrigen auch für eine Verriegelung, so daß eine besondere Verriegelung in der Schließ- und Öffnungsstellung des Absperrelements 24 nicht erforderlich ist.

In den Figuren 5 und 6 ist eine Verteilvorrichtung äußerst schematisch dargestellt, welche Kupplungsanordnungen, etwa gemäß Fig. 1, verwendet. Bei der Ausführungsform nach Fig. 5 sind an einer Platte 90 auf einem Kreisbogen mehrere Vaterkupplungsteile 91 angeordnet. Die Vaterkupplungsteile 91 sind mit ersten Leitungen 92 verbunden. Ein Rohrbogen 93 ist bei 94 mit einem Drehgelenk versehen, das mit einer weiteren Leitung 95 verbunden ist. Am anderen Ende des Rohrbogens ist ein Mutterkupplungsteil 96 entsprechend dem Mutterkupplungsteil 10 nach Fig. 1 angebracht. Mit dem Rohrbogen 93 ist ein Verstellhebelmechanismus 97 drehbar verbunden, der am Ende ein Kreisringsegment 98 entsprechend dem Ringsegment 54 nach Fig. 1 hält. Durch Verschwenken des Rohrbogens 93 um eine Achse 99 kann das Mutterkupplungsteil 96 wahlweise mit einem der Vaterkupplungsteile 91 ausgerichtet werden. Mit Hilfe des Kreisringsegments 98 kann die Kupplungsverbindung hergestellt werden (ein Riegel entsprechend dem Riegel 62 gemäß Fig. 1 kann entfallen). Auf diese Weise ist es möglich, Medium aus der Leitung 95 in eine der Leitungen 92 zu geben.

Bei der Ausführungsform nach Fig. 6 weist eine Platte 90' wiederum eine Anzahl von Vaterkupplungsteilen 91' auf, die auf einem kreisförmigen Bogen angeordnet und mit ersten Leitungen 92' verbunden sind. Ein S-förmiger Rohrbogen 100 ist an einem Ende mit einer Welle 101 verbunden, die bei 102 drehbar in der Platte 90' gelagert ist zwecks Verdrehung des Rohrbogens 100 um eine Achse 102, die durch den Mittelpunkt des Kreises geht, auf dem die Vaterkupplungsteile 91' angeordnet sind. Am anderen Ende des Rohrbogens 100 ist ein Mutterkupplungsteil 96' angeordnet, das mit Hilfe eines Kupplungsringsegments 98' mit einem der Vaterkupplungsteile 91' in der oben beschriebenen Weise gekuppelt werden kann. Das Kupplungsringsegment 98' ist mit Hilfe eines Verstellzylinders 104 betätigbar, der mit der Welle 101 verbunden ist. Das dem Mutterkupplungsteil 96' abgewandte Ende des Rohrbogens 100 ist bei 106 mit einer zweiten Leitung 107 verbunden. Auf diese Weise kann das Medium aus der Leitung 107 in eine der Leitungen 92' gefördert werden. Es versteht sich, daß die Förderrichtung, die in den Figuren 5 und 6 durch Pfeile angedeutet ist, auch entgegengesetzt sein kann.

In Fig. 4 ist eine Einzelheit der schematischen Anordnung nach Fig. 6 näher zu erkennen. Die Kupplungsteile 96', 91' sind ohne Absperrelemente und dergleichen dargestellt. Letztere wurden aus Vereinfachungsgründen fortgelassen. Man erkennt, daß mit dem Kupplungsringsegment 98' eine Fahne 106 verbunden ist, die sich annähernd parallel zur Kolbenstange des Verstellzylinders 104 erstreckt. In der Platte 90' sitzt ein Initiator 107, der feststellt, wenn die Fahne 106 in der in Fig. 4 gezeigten Position ist, um den gekuppelten Zustand anzuzeigen. Wird nun jedem Vaterkupplungsteil 91' ein solcher Initiator 107 zugeordnet, kann das Kuppeln und das Trennen der Kupplungsteile 91', 96' automatisch erfolgen und automatisch überwacht werden.

Die in Fig. 1 dargestellte Kupplungsanordnung kann auch als sogenannte Sicherheitstrennkupplung eingesetzt werden, welche ein rasches, möglichst automatisches Trennen der Kupplungsteile zulassen soll, wenn hierzu ein entsprechendes Signal erzeugt wird. Die Kupplungsteile können wiederum durch ein oder mehrere Kupplungsringsegmente miteinander kuppelbar sein. Vorzuziehen sind jedoch zwei oder mehr Ringsegmente, die über den Umfang einen Umfangsbereich von weniger als 180° abdecken. So können etwa drei relativ kurze Ringsegmente 110 verwendet werden, die in gleichmäßigem Abstand voneinander angeordnet sind, wie in Fig. 9 dargestellt ist. Die Ringsegmente 110 können jeweils mit einem Schwenkhebel 111 verbunden sein, der am Mutterkupplungsteil 10 schwenkbar gelagert ist. Wird auf den Hebel 111 in Richtung des Pfeils 112 ein Druck oder ein Zug ausgeübt, kommt das Kupplungsringsegment 110 augenblicklich mit den Kupplungsteilen 10, 11 außer Eingriff. Die Kupplungsteile 10, 11 können daher automatisch und rasch getrennt werden. Das Signal zur Betätigung der Hebel 111 kann durch eine entsprechende, nicht gezeigte Sicherheitsvorrichtung erteilt werden. Es muß jedoch sichergestellt sein, daß mit dem Trennen der Kupplungsteile 10, 11 die Absperrelemente 24, 25 automatisch in Schließstellung gehen. Dies kann durch Freigabe der Verriegelung am Handgriff 72 geschehen oder durch Betätigung des Verstellzylinders 80 nach Fig. 7.

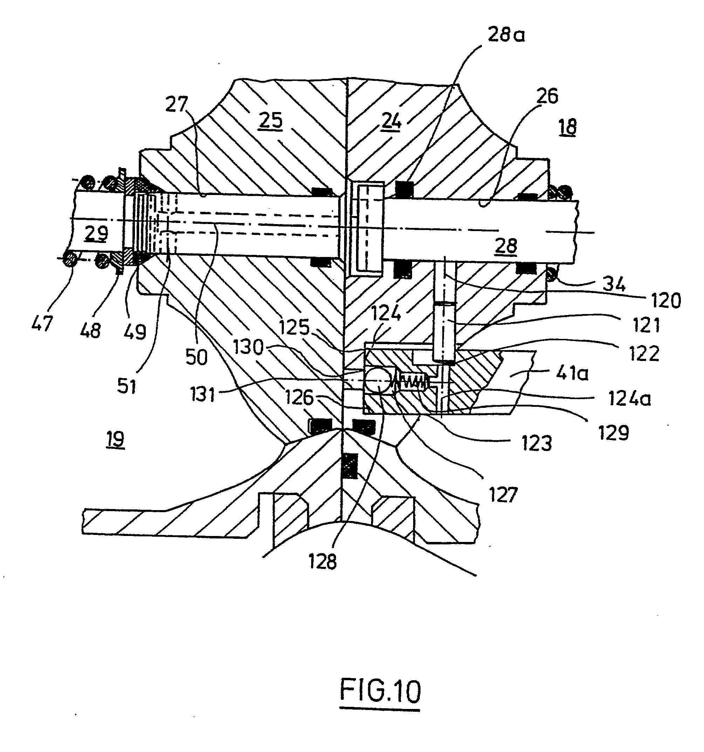

Soweit die Einzelheiten nach Fig. 10 mit denen nach Fig. 1 übereinstimmen, sind gleiche Bezugszeichen eingesetzt. Man erkennt aus Fig. 10, daß das eine Ende der dritten Stange 41a gegenüber dem nach Fig. 1 abgewandelt ausgebildet ist. In einer Querbohrung 120 im Absperrelement 24 ist ein Stift 121 angebracht, der in eine achsparallele Umfangsnut 122 eingesetzt ist. Da die Länge der Nut 122 größer ist als der Durchmesser des Stiftes 121 kann sich die Stange 41a begrenzt in einer Bohrung 123 des Absperrelements 24 bewegen. Eine Querbohrung 124a in der Stange 41a außerhalb der Bohrung 123 ist mit der Nut 122 verbunden und mündet in den Raum 18 hinter dem Absperrelement 24. Eine Nut 124 in der Bohrung 123 steht mit der Nut 122 in Verbindung. Die Nut 124 führt zum Spalt zwischen dem Absatz 125 in der Bohrung 123 und der konischen Stirnfläche 126 der Stange 41a. Die Stange 41a weist an der Stirnfläche eine Bohrung 127 auf, in der eine Kugel 128 angeordnet ist. Die Kugel 128 wird von einer Feder 129 beaufschlagt. Die Bohrung 127 ist zur Stirnseite etwas verengt, so daß dort ein Kugelsitz 130 gebildet ist, gegen den die Kugel 128 unter dem Druck der Feder 129 anliegt. Die Kugel 128 ragt indessen über Bohrung 127 hinaus und liegt gegen einen Ventilsitz, der von dem Bohrungsabschnitt 131 gebildet ist, in den die Bohrung 123 übergeht. Der Bohrungsabschnitt 131 mündet an der Stirnfläche des Absperrelements 24.

Bei Betätigung der Kupplung wird, wie bereits beschrieben, die Stange 41 bzw. 41a in Fig. 10 nach rechts bewegt. Dadurch hebt die Kugel 128 vom Ventilsitz ab. Damit ist über die Bohrung 124a, die Nut 122, die Nut 124 und den Bohrungsabschnitt 131 eine Verbindung zwischen dem Raum 18 und der Stirnfläche des Absperrelements 24 hergestellt. Die Stirnfläche steht, wie bereits in Verbindung mit Fig. 1 beschrieben, mit den Bohrungen 50 und 51 in der Stange 29 in Verbindung. Hebt bei entsprechender Bewegung der Stange 28 nach links die Dichtung 49 vom zugeordneten Sitz ab, ist eine Verbindung zwischen den Räumen 18 und 19 hergestellt und damit ein Druckausgleich.

## Patentansprüche

1. Vollschlauchsystemkupplung, bei der das Gehäuse bei jedem der Kupplungsteile einen konischen Ventilsitz aufweist, der mit einem eine radial verlaufende Stirnfläche aufweisenden Absperrelement mit konischer Dichtfläche zusammenwirkt, das mittels einer Feder gegen den Ventilsitz vorgespannt ist, bei der ferner beide Absperrelemente je eine gleitend gelagerte Stange aufweisen, wobei eine erste Stange in einer Bohrung des ersten Absperrelements gelagert ist und über eine Öffnung in der Stirnfläche des ersten Absperrelements in Anlage mit der Stirnfläche des zweiten Absperrelements bringbar ist, und die zweite Stange in einem Führungsteil im Kupplungsgehäuse geführt ist und als Führung für das zweite Absperrelement dient, bei der ferner eine Betätigungsvorrichtung für die erste Stange vorgesehen ist zur Verstellung der ersten Stange in Richtung des zweiten Absperrelements und des ersten Absperrelements sowie des zweiten Absperrelements in die Öffnungsstellung und bei der schließlich eine Kupplungsverbindung vorgesehen ist, welche die Kupplungsteile lösbar miteinander verbindet, dadurch gekennzeichnet, daß die Kupplungsgehäuse (12, 13) glatte radial verlaufende Stirnflächen (20, 21) aufweisen und mit Hilfe einer U-förmigen Ringsegmentanordnung (54), die mit einer äußeren Ringnut (57) bzw. einem Ringbund des Kupplungsgehäuses (13) zusammenwirkt, verbindbar sind, die radial verlaufenden Stirnflächen der Absperrelemente (24, 25) in der Schließstellung annähernd in der Ebene der Gehäusestirnflächen (20, 21) liegen und die erste Stange (28) mit einem Getriebe (39) im Kupplungsgehäuse (12) so gekoppelt ist, daß bei ihrer Verstellung in Richtung des zweiten Absperrelements (25) zu dessen Öffnung auch das erste Absperrelement (24) in die Öffnungsstellung bewegt wird.

2. Kupplung nach Anspruch 1, dadurch gekennzeichnet, daß die erste Stange (28) einen Anschlag (28a) im Abstand vom freien Ende aufweist, das zweite Absperrelement (25) eine Bohrung (27) aufweist, in der bei Betätigung der ersten Stange (28) ein Endabschnitt der ersten Stange eingreift unter Anlage des Anschlags (28a) an der Stirnfläche des zweiten Absperrelements (25).

3. Kupplung nach Anspruch 1 oder 2, dadurch gekennzeichet, daß die erste Stange (28) außerhalb des ersten Absperrelements (24) eine Zahnung (38) aufweist, die mit einem Ritzel (39) in Eingriff ist, eine an dem ersten Absperrelement (24) angreifende dritte Stange (41) annähernd parallel zur ersten Stange (28) verläuft und ebenfalls eine Zahnung (42), die mit dem Ritzel (39) in Eingriff ist.

4. Kupplung nach einem der Ansprüche 1 bis 3, dadurch gekennzeichnet, daß die erste Stange (28) von einem außerhalb des Kupplungsgehäuses (12) angeordneten Verstellzylinder (80) betätigbar ist.

5. Kupplung nach einem der Ansprüche 1 bis 3, dadurch gekennzeichnet, daß das Ritzel (39) auf einem Drehzapfen (40) sitzt, der aus dem Kupplungsgehäuse (12) herausgeführt und mit einer Handhabe (72) verbunden ist.

6. Kupplung nach einem der Ansprüche 1 bis 5, dadurch gekennzeichnet, daß eine U-förmige Ringsegmentanordnung (54) sich nur über etwa 180° um das Gehäuse (12) des Mutterkupplungsteils (10) erstreckt und eine Verriegelungsvorrichtung (62) vorgesehen ist, die eine seitliche Bewegung des Vaterkupplungsteils (11) von dem Mutterkupplungsteil (10) entgegen der Kreisringsegmentanordnung (54) verhindert, wenn es mit dem Vaterkupplungsteil (11) in Eingriff ist.

7. Kupplung nach einem der Ansprüche 1 bis 6, dadurch gekennzeichnet, daß die erste Stange (28) bei Betätigung mit einem im zweiten Absperrelement (25) gelagerten Ventilelement derart zusammenwirkt, daß zu Beginn des Verstellvorgangs der ersten Stange (28) ein Strömungs kanal zwischen den Räumen (18, 19) herstellt ist, die auf der dem Ventilsitz (22, 23) gegenüberliegenden Seite der Absperrelemente (24, 25) liegen.

8. Kupplung nach Anspruch 2 und 7, dadurch gekennzeichnet, daß der Strömungskanal hergestellt ist, bevor der Anschlag (26) am zweiten Absperrelement (25) anliegt.

9. Kupplung nach Anspruch 1 und 7, gekennzeichnet durch ein Spiel im Getriebe derart, daß das erste Absperrelement (25) erst betätigt wird, wenn die erste Stange (28) eine gewisse Strecke zurückgelegt hat.

10. Kupplung nach einem der Ansprüche 7 bis 9, dadurch gekennzeichnet, daß das Ventilelement von einem Abschnitt der zweiten Stange (29) gebildet ist, der in einer zur Stirnfläche des zweiten Absperrelements (25) geöffneten Bohrung (27) gleitend gelagert ist und seinerseits eine Längsbohrung (50) aufweist, die mit dem zum zugeordneten Raum (19) hinter dem zweiten Absperrelement (25) in Verbindung tritt, wenn die zweite Stange (29) von der ersten Stange betätigt wird.

11. Kupplung nach Anspruch 10, dadurch gekennzeichnet, daß im ersten Absperrelement (24) eine Querbohrung (31) geformt ist, die mit der Längsbohrung (26) im ersten Absperrelement (24) verbunden ist, die erste Stange (28) mit der Längsbohrung (26) ein Entlastungsventil bildet, das bei Betätigung der ersten Stange (28) eine an der Außenseite der ersten Stange (28) vorgesehene, mit der Querbohrung (31) verbundene Nut (33) zur Stirnseite des ersten Absperrelements (24) öffnet zwecks Verbindung mit der Längsbohrung (50) in der zweiten Stange (29).

12. Kupplung nach Anspruch 10, dadurch gekennzeichnet, daß die dritte Stange (41a)in einer Bohrung (123) des ersten Absperrelements (24) begrenzt beweglich gelagert ist, die dritte Stange (41a)ein Ventilglied (128) aufweist, das mit einem Ventilsitz (131) in der Bohrung (123) zusammenwirkt, eine Bohrung vom Ventilsitz zur Stirnfläche des ersten Absperrelements (24) führt und das Ventilglied in der Öffnungsstellung einen Strömungskanal (124a,121, 124, 131) vom Raum (18) hinter dem ersten Absperrelement (24) zum Ventilsitz freigibt.

13. Kupplung nach Anspruch 12, dadurch gekennzeichnet, daß das Ventilglied von einer Kugel (128) gebildet ist, die in einer Bohrung (127) der dritten Stange (41a) sitzt, wobei die Bohrung am vorderen Ende sich zu einem Kugelsitz (130) verjüngt und die Kugel (128) von einer Feder (129) gegen den Kugelsitz (130) gedrückt wird.

14. Kupplung nach Anspruch 12 oder 13, dadurch gekennzeichnet, daß der Strömungskanal von einer Querbohrung (124a)in der dritten Stange (41a) außerhalb der Bohrung (123) des ersten Absperrelements (24) und einem Kanal (124) im Bereich der Bohrung (123) im ersten Absperrelement (24) zum Ventilsitz gebildet ist.

15. Kupplung nach einem der Ansprüche 1 bis 14, gekennzeichnet durch eine Anwendung als Sicherheitstrennkupplung, wobei im Ansprechfall die Kupplungsverbindung gelöst und die Absperrelemente (24, 25) in die Schließstellung bewegt werden entweder mit Hilfe eines an der ersten Stange (28) angreifenden Verstellzylinders (80) oder durch Aufheben der Verriegelung der ersten Stange (28) bzw. des Getriebes in der Öffnungsstellung der Absperrelemente.

16. Kupplung nach einem der Ansprüche 1 bis 14, gekennzeichnet durch die Anwendung auf einen Rohrverteiler, bei dem ein um eine Achse (99, 102) dreh- oder schwenkbares Rohrstück (93, 100) mit einer ersten Leitung (95, 107) verbunden ist und am freien Ende das die erste Stange aufweisende Kupplungsteil (96, 96') angeordnet ist, bei dem ferner in einer Ebene (90), die parallel zur Schwenkebene des ersten Kupplungsteils (96, 96') zweite Kupplungsteile (91, 91') angeordnet sind, die jeweils mit einer zweiten Leitung (92, 92') verbunden sind.

## Claims

1. A hose system coupling, the housing thereof comprising a conical valve seat at each of the coupling members, the valve seat co-operating with a sealing element with a conical sealing surface, the sealing element comprising a radially extending front surface and being biased against the valve seat by means of a spring, the two sealing elements further comprising a slidingly supported rod each, wherein a first rod is supported in a bore of the first sealing element and is adapted to be abutted with the front surface of the second sealing element through an aperture in the front surface of the first sealing element, and the second rod is guided in a guiding portion in the coupling housing and serves as a guide for the second sealing element and wherein further an actuating device for the first rod is provided to adjust the first rod in direction of the second sealing element and the first sealing element and the second sealing element in the opening position and wherein finally a coupling connection is provided detachably connecting the coupling members, characterized in that the coupling housings (12, 13) comprise smooth radially extending front surfaces (20, 21) and are connectable by means of a U-shaped annular segment arrangement (54) co-operating with an outer annular groove (57) or an annular shoulder of the coupling housing (13), respectively, the radially extending front surfaces of the sealing elements (24, 25) approximately extend in the plane of the front surfaces (20, 21) of the housing in the closing position, and the first rod (28) is coupled with a gear unit (39) in the coupling housing (12) such that during the adjustment thereof in direction of the second sealing element (25) for the opening thereof also the first sealing element (24) is moved into the opening position.

2. Coupling as claimed in claim 1, characterized in that the first rod (28) comprises a stop element (28a) spaced from the free end thereof, the second sealing element (25) comprises a bore (27) into which an end portion of the first rod engages when actuating the first rod (28) wherein the stop element (28a) abuts against the front surface of the second sealing element.

3. Coupling as claimed in claim 1 or 2, characterized in that the first rod (28) comprises a toothing (38) outside of the first sealing element (24), the toothing meshing with a pinion (39), a third rod (41) engaging the first sealing element (24) extends approximately parallel with the first rod (28) and also comprises a toothing (42) meshing with the pinion (39).

4. Coupling as claimed in one of the claims 1 to 3, characterized in that the first rod (28) is actuable by an adjustment cylinder (80) arranged outside of the coupling housing (12).

5. Coupling as claimed in one of the claims 1 to 3, characterized in that the pinion (39) is positioned at a turning pin (40) extending out of the coupling housing (12) and being connected with a handle (72).

6. Coupling as claimed in one of the claims 1 to 5, characterized in that a U-shaped annular segment arrangement (54) extends only about 180° around the housing (12) of the female coupling member (10) and a locking device (62) is provided preventing a lateral movement of the male coupling member (11) with respect to the female coupling member (10) against the annular segment arrangement (54) when being engaged with the male coupling member (11).

7. Coupling as claimed in one of the claims 1 to 6, characterized in that the first rod (28) when actuated cooperates with a valve element supported in the second sealing element (25) such that at the beginning of the adjusting operation of the first rod (28) a fluid passage is provided between the chambers (18, 19) being positioned at the side of the sealing elements (24, 25) opposite to the valve seat (22, 23).

8. Coupling as claimed in claims 2 and 7, characterized in that the fluid passage is established before the stop element (26) abuts against the second sealing element (25).

9. Coupling as claimed in claims 1 and 7, characterized in that a backlash is provided in the gear unit such that the first sealing element (25) is actuated only when the first rod (28) has moved a certain distance.

10. Coupling as claimed in one of the claims 7 to 9, characterized in that the valve element is formed by a portion of the second rod (29), the portion being slidingly supported in a bore (27) open to the front surface of the second sealing element (25), the portion comprising a longitudinal bore (50) communicating with the associated chamber (19) behind the second sealing element (25) when the second rod (29) is actuated by the first rod.

11. Coupling as claimed in claim 10, characterized in that a transverse bore (31) is formed in the first sealing element (24), the transverse bore communicating with the longitudinal bore (26) in the first sealing element (24), the first rod (28) defines a release valve with the longitudinal bore (26), the release valve opening a groove (33) when actuating the first rod (28), the groove being provided at the outside of the first rod (28) and connected with the transverse bore (31) to the front surface of the first sealing element (24) for the connection thereof with the longitudinal bore (50) in the second rod (29).

12. Coupling as claimed in claim 10, characterized in that the third rod (41a) is supported in a bore (123) of the first sealing element (24) with limited movability, the third rod (41a) comprises a valve member (128) cooperating with a valve seat (131) in the bore (123), a bore extending from the valve seat to the front surface of the first sealing element (24), and the valve member in the opening position thereof provides a fluid passage (124a, 121, 124, 131) from chamber (18) behind the first sealing element (24) to the valve seat.

13. Coupling as claimed in claim 12, characterized in that the valve member is defined by a ball (128) positioned in a bore (127) of the third rod (41a) wherein the bore at the front end thereof narrows to form a ball seat (130) and the ball (128) is urged against the ball seat (130) by a spring (129).

14. Coupling as claimed in claims 12 or 13, characterized in that the fluid passage is defined by a transverse bore (124a) in the third rod (41a) outside of the bore (123) of the first sealing element (24) and a passage (124) in the area of the bore (123) in the first sealing element (24) to the valve seat.

15. Coupling as claimed in one of the claims 1 to 14, characterized by an application as a safety shutoff coupling wherein when responding the coupling connection is released and the sealing elements (24, 25) are moved into the closing position either by means of an actuating cylinder (80) engaging the first rod (28) or by releasing the locking of the first rod (28) or the gear unit, respectively, in the opening position of the sealing elements.

16. Coupling as claimed in one of the claims 1 to 14, characterized by the application thereof at a pipe manifold wherein a line portion (93, 100) turnable or pivotable about an axis (99, 102) is connected with a first line (95, 107) and at the free end thereof the coupling member (96, 96') comprising the first rod is arranged, and wherein further in a plane (90) extending parallel with the plane of the pivotal movement of the first coupling member (96, 96') second coupling members (91, 91') are arranged, each connected with a second line (92, 92').

**Revendications**

1. Raccord pour système de tuyaux souples, dans lequel le corps présente sur chacune des parties du raccord un siège de soupape conique, qui est associé à un élément d'obturation présentant une face frontale s'étendant radialement avec une surface de contact conique, qui est précontraint au moyen d'un ressort contre le siège de soupape; dans lequel, en outre, les deux éléments d'obturation présentent chacun une tige à montage coulissant, une première tige étant montée dans un alésage du premier élément d'obturation et pouvant être amenée en appui sur la surface frontale du deuxième élément d'obturation à travers une ouverture aménagée dans la face frontale du premier élément d'obturation, et la deuxième tige étant guidée dans une partie de guidage du corps de raccord et servant de guide pour le deuxième élément d'obturation dans lequel est prévu, en outre, un dispositif de manœuvre de la première tige pour déplacer celle-ci en direction du deuxième élément d'obturation, et le premier élément d'obturation, ainsi que le deuxième élément d'obturation, vers la position d'ouverture; et dans lequel, finalement, il est prévu un accouplement de raccord, qui assure une liaison amovible des parties du raccord entre elles, caractérisé en ce que les corps de raccord (12, 13) présentent des faces frontales (20, 21) lisses s'étendant radialement, qui peuvent être reliées à l'aide d'un dispositif comportant un segment annulaire en forme d'U (54), qui peut être accouplé avec une gorge circulaire extérieure (57) ou un collet circulaire du corps de raccord (13), les faces frontales s'étendant radialement des éléments d'obturation (24, 25) se trouvent, en position de fermeture, sensiblement dans le plan des faces frontales (20, 21) des corps, et la première tige (28) est accouplée avec un engrenage (39) dans le corps de raccord (12), de telle sorte que, lors de son déplacement en direction du deuxième élément d'obturation (25) pour l'ouverture de celui-ci, le premier élément d'obturation (24) est également déplacé vers la position d'ouverture.

2. Raccord selon la revendication 1, caractérisé en ce que la première tige (28) présente une butée (28a) à quelque distance de son extrémité libre, et le deuxième élément d'obturation (25) présente un alésage (27), dans lequel s'engage, lors de la manœuvre de la première tige (28) une partie d'extrémité de celle-ci, avec appui de la butée (28a) sur la face frontale du deuxième élément d'obturation (25).

3. Raccord selon la revendication 1 ou 2, caractérisé en ce que la première tige présente, en dehors du premier élément d'obturation (24), une denture (38), qui est en prise avec un pignon (39), une troisième tige (41), qui attaque le premier élément d'obturation (24), s'étend de manière sensiblement parallèle à la première tige (28) et présente également une denture (42), qui est en prise avec le pignon (39).

4. Raccord selon l'une des revendications 1 à 3, caractérisé en ce que la première tige (28) peut être actionnée par un vérin de commande (80) disposé en dehors du corps de raccord (12).

5. Raccord selon l'une des revendications 1 à 3, caractérisé en ce que le pignon (39) est monté sur un pivot (40) qui sort du corps de raccord (12) et qui est relié à une poignée (72).

6. Raccord selon l'une des revendications 1 à 5, caractérisé en ce qu'un dispositif (54) à segment annulaire en forme de U s'étend sur 180° environ autour du corps (12) de la partie femelle (10) du raccord, et en ce qu'il est prévu un dispositif de verrouillage (62), qui empêche un déplacement latéral de la partie mâle (11) du raccord par rapport à la partie femelle (10) du raccord en sens contraire au dispositif à segment annulaire (54), lorsqu'il est en prise avec la partie mâle (11) du raccord.

7. Raccord selon l'une des revendications 1 à 6, caractérisé en ce que la première tige (28) coopère lors de la manœuvre, avec un élément de soupape monté dans un deuxième élément d'obturation (25) de telle sorte qu'il est créé, au début du processus de déplacement de la première tige (28), un canal d'écoulement entre les chambres (18, 19) qui se trouvent sur les faces des éléments d'obturation (24, 25) en regard du siège de soupape (22, 23).

8. Raccord selon les revendications 2 et 7, caractérisé en ce que le canal d'écoulement est créé avant que la butée (26) s'appuie sur le deuxième élément d'obturation (25).

9. Raccord selon les revendications 1 à 7, caractérisé par un jeu dans l'engrenage de telle sorte que le premier élément d'obturation (25) n'est actionné que lorsque la première tige (28) a parcouru une certaine distance.

10. Raccord selon l'une des revendications 7 à 9, caractérisé en ce que l'élément de soupape est constitué par une partie de la deuxième tige (29), qui est montée coulissante dans un alésage (27) ouvert du côté de la face frontale du deuxième élément d'obturation (25), et présente pour sa part un alésage longitudinal (50) qui est mis en communication avec la chambre (19) située derrière le deuxième élément d'obturation, lorsque la deuxième tige (29) est actionnée par la première tige.

11. Raccord selon la revendication 10, caractérisé en ce qu'il est ménagé, dans le premier élément d'obturation (24), un alésage transversal (31), qui est en communication avec l'alésage longitudinal (26) du premier élément d'obturation (24), en ce que la première tige (28) constitue, avec l'alésage longitudinal (26), une soupape de délestage, qui, lors de la manœuvre de la première tige (28), ouvre, du côté de la face frontale du premier élément d'obturation, une gorge (33) prévue sur la face extérieure et reliée à l'alésage transversal (31) de la première tige (28), dans un but de mise en communication avec l'alésage longitudinal (50) de la deuxième tige (29).

12. Raccord selon la revendication 10, caractérisé en ce que la troisième tige (41a) est montée avec possibilité de déplacement limitée dans un alésage (123) du premier élément d'obturation (24), en ce que la troisième tige (41a) présente un élément de soupape (128), qui est associé à un siège de soupape (131) logé dans l'alésage (123), en ce qu'un alésage mène du siège de soupape à la face frontale du premier élément d'obturation (24) et en ce que l'élément de soupape libère, en position d'ouverture, un canal d'écoulement (124a, 121, 124, 131) allant de la chambre (18) située derrière le premier élément d'obturation (24) au siège de soupape.

13. Raccord selon la revendication 12, caractérisé en ce que l'élément de soupape est constitué par une bille (128), qui est logée dans un alésage (127) de la troisième tige (41a), lequel alésage se rétrécit à son extrémité avant en un siège de bille (130), la bille (128) étant appuyée par un ressort (129) contre ce siège de bille (130).

14. Raccord selon la revendication 12 ou 13, caractérisé en ce que le canal d'écoulement (124a) est constitué par un alésage transversal formé dans la troisième tige (41a) extérieurement à l'alésage (123) du premier élément d'obturation (24) et par un canal (124) ménagé dans la région de l'alésage (123) du premier élément d'obturation (24) vers le siège de soupape.

15. Raccord selon l'une des revendications 1 à 14, caractérisé par son utilisation comme raccord de séparation de sécurité sur lequel, en cas de chute de la réponse, l'assemblage par raccord est défait et les éléments d'obturation (24, 25) sont déplacés vers la position de fermeture, soit à l'aide d'un vérin de commande (80) agissant sur la première tige (28), soit par relèvement du verrouillage de la première tige (28) ou de l'engrenage, en position d'ouverture des éléments d'obturation.

16. Raccord selon l'une des revendications 1 à 14, caractérisé par son utilisation sur un distributeur à tubes, dans lequel un élément tubulaire (93, 100), libre en rotation ou en oscillation autour d'un axe (99, 102) est relié à un premier conduit (95, 107) alors qu'est disposée à son extrémité libre la partie de raccord présentant la première tige (96, 96'), des deuxièmes parties de raccord (91, 91') étant en outre disposées dans un plan (90) parallèle au plan de pivotement de la première partie de raccord (91, 91') et étant respectivement reliées à un deuxième conduit (92, 92').

EP 0 251 091 B1

FIG.1

FIG.2

EP 0 251 091 B1

EP 0 251 091 B1

FIG.3

FIG.4

EP 0 251 091 B1

FIG.5

FIG.6

FIG.7

FIG.8

FIG.9

FIG.10